# DEMANDE DE BREVET EUROPEEN

(11) **EP 3 282 291 A1**
(43) Date de publication de la demande: **14.02.2018**
(21) Numéro de dépôt: 17190523.5
(22) Date de dépôt: 19.09.2011
(51) Int. Cl.: G02B 1/06, G02B 13/14, G02B 26/02, G02B 26/08, F16K 99/00, G02B 3/14, G02B 7/08, G02B 13/00

(54) **DISPOSITIF A MEMBRANE DEFORMABLE PAR ACTIONNEMENT A TEMPS DE REPONSE REDUIT**

(30) Priorité: 21.09.2010 FR 1057552
(62) Demande divisionnaire de: 11181772.2
(71) Demandeur: Webster Capital LLC, Wilmington, Delaware 19801 (US)
(72) Inventeur: BOLIS, Sébastien, 38920 Crolles (FR)
(74) Mandataire: Lang, Johannes

(57) **Abrégé**

Il s'agit d'un dispositif comportant une membrane (1), un support (2) délimitant une cavité (5) contenant un fluide (4), la membrane (1) comportant une zone d'ancrage (1.1) au support (2), une zone centrale (1.3) apte à se déformer lors d'un déplacement de fluide (4) et une zone d'actionnement (1.2) entre les zones d'ancrage et centrale (1.1, 1.3), et des moyens d'actionnement (8) pour solliciter la membrane (1) dans la zone d'actionnement (1.2) et provoquer un déplacement du fluide (4) vers la zone centrale (1.3) lors d'un actionnement. La cavité (5) comporte une chambre principale (5.1) au niveau de la zone centrale (1.3) et une chambre périphérique (5.2) au niveau de la zone d'actionnement (1.2) communiquant avec la chambre principale (5.1), la chambre périphérique (5.2) comportant au moins une structure d'écoulement forcé (9) favorisant l'écoulement d'au moins une partie du fluide (4) de la chambre périphérique vers la chambre principale (5.1) ou vice versa lors de l'actionnement, une même structure d'écoulement forcé (9) étant dépourvue de fixation à la fois sur le support (2) et sur la membrane (2).

## Description

### DOMAINE TECHNIQUE

La présente invention concerne un dispositif à membrane déformable piégeant du fluide et doté de moyens d'actionnement de la membrane pour ajuster son rayon de courbure. Ces dispositifs peuvent être employés comme lentille liquide à focale variable, lentille liquide à corrections d'aberrations optiques pour de l'optique adaptative, dispositif de stabilisation d'images ou comme miroir à focale variable. Les lentilles liquides sont utilisables par exemple dans les téléphones portables avec fonction d'appareil photographique ou de caméra. De nombreux développements sont en cours dont notamment la fonction d'autofocus et la fonction zoom. Une autre application concerne les caméras fonctionnant dans l'infrarouge (IR). L'avancement en termes d'intégration est moindre, dans la plupart des cas, les optiques sont dissociées des caméras. Plusieurs développements sont en cours dont notamment l'intégration des optiques (création d'un module caméra), l'intégration de la fonction autofocus,... Pour l'instant, les solutions techniques associées ne sont pas connues et demandent à être définies.

Dans une application de miroir à membrane déformable, cette dernière est réfléchissante. On peut être amené à vouloir ajuster la distance focale du miroir et donc son rayon de courbure. Un tel miroir peut être utilisé en ophtalmologie ou en optique adaptative. Enfin, ces dispositifs optiques, qu'ils soient de type lentille ou miroir peuvent être utilisés pour stabiliser des images.

### ÉTAT DE LA TECHNIQUE ANTÉRIEURE

On connait les demandes FR 2 919 073, FR 2 919 074, FR 2 930 352, FR 2 938 349 qui montrent de tels dispositifs à membrane déformable. On se réfère à la figure 1 qui montre schématiquement en coupe un dispositif optique à membrane connu. Dans ce dispositif, pour une gamme de température et une gamme de pression ambiantes données, la membrane 1 fixée sur un support 2 dans une zone d'ancrage 1.1 contribue à piéger un volume sensiblement constant de fluide 4. Le fluide 4 est piégé par la membrane 1 ancrée au support 2. Le support 2 et la membrane forment alors une cavité 5 avec un fond 6 se trouvant au niveau du support 2 et éventuellement des flancs 7 si le support 2 comporte une cuvette. La membrane 1 comporte donc depuis le support 2: la zone d'ancrage 1.1 à sa périphérie, puis une zone d'actionnement 1.2 sur laquelle agissent des moyens d'actionnement 8, elle est entourée par la zone d'ancrage 1.1, puis une zone centrale 1.3 qui est entourée par la zone d'actionnement 1.2 et dont on veut ajuster la courbure. La zone centrale 1.3 correspond au champ optique du dispositif optique obtenu.

Les moyens d'actionnement 8 lorsqu'ils sont actionnés d'une position de repos à une position de travail, visent à réduire l'épaisseur de fluide 4 piégé par la membrane 1 à leur niveau et génèrent un déplacement du fluide 4 vers la zone centrale 1.3, déformant alors la membrane 1 en la bombant. La membrane 1 est représentée en pointillés au repos et en traits pleins en position de travail sur une grande partie des figures en coupe. Les flèches indiquent le mouvement du fluide 4. Le déplacement du fluide 4 vers la zone d'ancrage 1.1 n'est pas significatif à cause de la proximité des flancs 7 et de l'ancrage.

La membrane 1 est suffisamment souple pour que la déformation de sa zone centrale 1.3 soit réversible, lorsque l'actionnement a cessé et que les moyens d'actionnement 8 retrouvent leur position de repos. Elle fait barrière au fluide 4 emprisonné de manière à ce qu'il ne s'échappe pas. Une des faces principales de la membrane 1 est en contact avec le fluide 4 piégé dans la cavité 5.

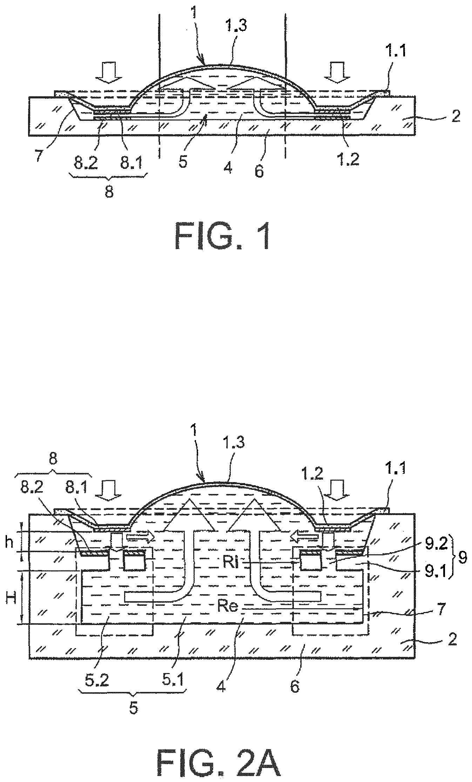

Les moyens d'actionnement 8 peuvent être électrostatiques comme illustré sur la figure 1 et se répartir à la fois sur la membrane 1 et sur le fond 6 de la cavité 5. En variante, ils peuvent être piézoélectriques, bimorphes thermiques, magnétiques. Dans toutes les configurations, ils agissent sur la zone d'actionnement 1.2 de la membrane 1 et en sont solidaires ou non au repos. Lors de l'actionnement, les moyens d'actionnement 8 viennent en contact avec la totalité de la zone d'actionnement 1.2 de la membrane 1 ou avec seulement quelques portions.

Dans le cas où le dispositif à membrane est une lentille, la membrane, au moins dans sa zone centrale, et le support en regard de la zone centrale sont transparents à un faisceau optique destiné à se propager à travers la lentille.

Dans le cas où le dispositif à membrane est un miroir, la membrane au moins dans sa zone centrale est réfléchissante à un faisceau optique incident.

Dans les configurations où, la zone qui induit les déplacements du fluide, ce qui correspond globalement à la zone d'actionnement 1.2, a de grandes dimensions par rapport à l'épaisseur de fluide 4 se trouvant piégé par la membrane 1 au niveau de la zone d'actionnement 1.2, l'écoulement du fluide 4 vers la zone centrale 1.3 se fait difficilement.

Le fluide 4 est pincé entre la partie des moyens d'actionnement 8 coopérant avec la membrane 1 que l'on actionne et le fond 6 de la cavité 5 et ainsi l'écoulement du fluide 4 vers la zone centrale 1.3 est lent. Cette difficulté impacte directement le temps de réponse du dispositif à membrane.

De plus, dans ce genre de dispositif à membrane, on a un intérêt fort à utiliser une grande surface de contact entre les moyens d'actionnement 8 et la membrane pour déplacer une grande quantité de fluide 4 et donc obtenir une déformation importante de la membrane 1. On peut ainsi bénéficier d'une grande variation de distance focale. Par contre, il est aussi intéressant de diminuer la quantité de fluide 4 au droit des moyens d'actionnement 8. Dans le cas de moyens d'actionnement 8 électrostatiques, il y a au moins une paire d'électrodes en regard, l'une mobile référencée 8.1 côté membrane 1 et l'autre fixe, référencée 8.2 côté fond 6 de la cavité 5. Pour une tension de commande donnée et une consommation en énergie donnée, plus la distance entre les électrodes 8.1, 8.2 de la paire est petite plus la force électrostatique générée est grande et plus l'amplitude de la déformation est grande. On a donc intérêt à minimiser l'espacement entre les deux électrodes 8.1, 8.2 de la paire et donc l'épaisseur de fluide 4 occupant l'espace entre ces deux électrodes 8.1, 8.2. Ce qui vient d'être affirmé est vrai bien entendu, dans la mesure où il y a entre les deux électrodes 8.1, 8.2 de la paire suffisamment de fluide 4 pour engendrer le déplacement de fluide 4 recherché.

Il peut être avantageux, quel que soit le type des moyens d'actionnement 8, de minimiser la quantité de fluide 4 piégé par la membrane 1 afin de limiter la pression exercée par celui-ci dans le cas où, en raison de l'orientation du dispositif à membrane, le fluide 4 exerce une pression due à la pesanteur sur la membrane 1. On a également intérêt à limiter la quantité de fluide 4 piégé afin d'améliorer, pour une rigidité de membrane 1 donnée, la tenue aux chocs du dispositif à membrane.

Il peut également être intéressant, pour limiter des variations de distance focale induites involontairement, quel que soit le type des moyens d'actionnement 8, de minimiser la quantité de fluide 4 afin de limiter des variations de volume de fluide 4 induites par d'importantes variations de température et/ou de pression.

### EXPOSÉ DE L'INVENTION

La présente invention a justement comme but de proposer un dispositif à membrane qui ne présente pas les inconvénients mentionnés ci dessus.

Un but est en particulier de proposer un dispositif à membrane possédant un temps de réponse accru tout en conservant une grande amplitude de déformation de la membrane lors d'un actionnement.

Un autre but de l'invention est de proposer un dispositif à membrane qui lorsqu'il possède des moyens d'actionnement électrostatiques permet d'obtenir cette grande amplitude de déformation avec une consommation en énergie réduite.

Encore un autre but de l'invention est de proposer un dispositif à membrane qui est robuste aux chocs et dont l'effet de la pesanteur sur le fluide ne risque pas de détériorer la membrane.

Pour atteindre ces buts l'invention propose de forcer l'écoulement d'une partie du fluide vers la zone centrale de la membrane lors d'un actionnement agissant au niveau de la zone d'actionnement de la membrane pour faciliter et accélérer cet écoulement.

Plus précisément, la présente invention propose un dispositif comportant une membrane et un support, délimitant une cavité, contenant une quantité sensiblement constante d'un fluide, la membrane comportant une zone d'ancrage périphérique au support, une zone centrale apte à se déformer de manière réversible lors d'un déplacement du fluide et une zone d'actionnement entre la zone d'ancrage et la zone centrale, ainsi que des moyens d'actionnement destinés à solliciter la membrane dans la zone d'actionnement et à provoquer un déplacement du fluide vers la zone centrale lors d'un actionnement. Selon l'invention, la cavité comporte une chambre principale au niveau de la zone centrale et une chambre périphérique au niveau de la zone d'actionnement communiquant avec la chambre principale, en outre la chambre périphérique comporte au moins une structure d'écoulement forcé communiquant avec la chambre principale pour favoriser l'écoulement d'au moins une partie du fluide de la chambre périphérique vers la chambre principale ou vice versa lors de l'actionnement, le reste du fluide se déplaçant de la chambre périphérique vers la chambre principale ou vice versa sans passer par la structure d'écoulement forcé, une même structure d'écoulement forcé étant dépourvue de fixation à la fois sur le support et sur la membrane.

Les moyens d'actionnement sont conçus pour permettre une déformation symétrique de la membrane, par exemple pour réaliser une fonction de focale variable ou une déformation dissymétrique par exemple pour assurer une fonction de stabilisation d'images.

Lorsque la cavité est délimitée dans le support par des flancs et un fond, la structure d'écoulement forcé peut comprendre une paroi ajourée se projetant depuis les flancs dans la chambre périphérique en direction de la chambre principale.

Lorsque les moyens d'actionnement comportent une pluralité d'actionneurs venant en contact avec la membrane dans la zone d'actionnement au niveau d'une zone de contact, la paroi ajourée peut comporter au moins un orifice en regard d'une zone de contact. Ainsi l'efficacité de la structure d'écoulement forcé est accrue.

En variante, la paroi ajourée peut comporter plusieurs zones riches en orifices et au moins une zone sans d'orifice, les moyens d'actionnement pouvant agir sur la membrane dans la zone d'actionnement en vis-à-vis d'une ou plusieurs zones riches en orifices et pas au niveau de la zone sans orifice.

En munissant la paroi ajourée d'au moins une électrode des moyens d'actionnement de type électrostatique, cette électrode faisant face à une autre électrode portée par la membrane, on peut ainsi réduire l'épaisseur de fluide entre les deux électrodes et rendre les moyens d'actionnement plus efficaces pour une même consommation d'énergie.

Dans le même but, il est préférable que la paroi ajourée soit plus proche de la zone d'actionnement que du fond de la cavité.

En variante ou en combinaison, alors que le support forme un fond à la cavité, la structure d'écoulement forcé peut comporter une pluralité de tranchées intégrées à la membrane dans la zone d'actionnement et/ou intégrées au fond en regard de la zone d'actionnement et/ou intégrées aux moyens d'actionnement dans la mesure où ils sont en contact avec le fluide, ces tranchées étant dirigées de la chambre périphérique vers la chambre principale. Pour améliorer l'efficacité de la structure d'écoulement forcé, les tranchées sont dirigées de préférence radialement par rapport au centre de la chambre principale.

En outre, il est possible que la structure d'écoulement forcé comporte au moins une tranchée ortho radiale, pour que lors d'un actionnement dédié sur une portion de la zone d'actionnement, le fluide puisse être chassé le plus rapidement possible d'une partie de la chambre périphérique concernée par la portion de la zone d'actionnement actionnée vers le reste de la chambre périphérique et la chambre principale.

Les tranchées peuvent être formées dans le fond du support et lorsque le support est multicouche au niveau de son fond, les tranchées peuvent être formées totalement ou partiellement dans une couche superficielle du fond.

Les tranchées peuvent être formées dans la zone d'actionnement de la membrane, la zone d'actionnement étant avantageusement épaissie par rapport à la zone centrale.

La membrane peut comporter un empilement de couches au niveau de la zone d'actionnement, dans lequel les tranchées sont formées, cet empilement pouvant se prolonger au moins en partie au niveau de la zone d'ancrage.

Lorsque la structure d'écoulement forcée est intégrée aux moyens d'actionnement, les tranchées peuvent être délimitées par les moyens d'actionnement solidaires du fond et/ou par les moyens d'actionnement solidaires de la membrane en contact avec le fluide, les tranchées pouvant mordre dans ou mettre à nu le fond, respectivement la membrane.

Il est possible de faire pénétrer les tranchées situées au niveau du fond dans la chambre principale, toujours dans le but de réduire le temps de réponse du dispositif.

Les tranchées peuvent déboucher dans une cuvette portée par le fond située dans la chambre principale, cela facilite l'écoulement jusqu'au centre du dispositif.

Le fond peut comporter une fosse périphérique dans la chambre périphérique à l'opposé de la chambre principale, les tranchées débouchant dans la fosse lorsqu'elles sont formées dans le fond. L'intégration technologique et la fabrication de tels dispositifs sont alors facilitées.

Le dispositif à membrane objet de l'invention peut être un miroir ou une lentille.

La présente invention concerne également un dispositif de prise de vue incluant un dispositif à membrane ainsi caractérisé.

### BRÈVE DESCRIPTION DES DESSINS

La présente invention sera mieux comprise à la lecture de la description d'exemples de réalisation donnés, à titre purement indicatif et nullement limitatif, en faisant référence aux dessins annexés sur lesquels :
La figure 1 déjà décrite montre en coupe un dispositif à membrane de l'art antérieur ;
La figure 2A montre un dispositif à membrane objet de l'invention avec une structure d'écoulement forcé à paroi ajourée, les figures 2B et 2C montrent différentes variantes de paroi ajourée ;
Les figures 3A à 3I montrent en coupe ou en vue de dessus différentes variantes d'une structure d'écoulement forcé coopérant avec le fond de la cavité ;
La figure 4A montre en coupe un dispositif à membrane objet de l'invention à structure d'écoulement forcé intégrée au fond de la cavité et à moyens d'actionnement électrostatiques, la figure 4B étant une vue de dessus du fond de la cavité ;
La figure 5A montre en coupe un dispositif à membrane objet de l'invention à structure d'écoulement forcé intégrée à la membrane et à moyens d'actionnement électrostatiques, la figure 5B étant une vue de dessous de la membrane ;
La figure 6A montre en coupe un dispositif à membrane objet de l'invention à structure d'écoulement forcé intégrée aux moyens d'actionnement électrostatiques du côté du fond de la cavité, la figure 6B étant une vue de dessous de la membrane ;
La figure 6C montre en coupe un dispositif à membrane objet de l'invention à structure d'écoulement forcé intégrée aux moyens d'actionnement électrostatiques du côté de la membrane ;
La figure 7A montre en coupe un dispositif à membrane objet de l'invention à structure d'écoulement forcé intégrée aux moyens d'actionnement de type piézoélectrique, bimorphe thermique ou magnétique du côté de la membrane, la figure 7B étant une vue de dessous de la membrane ;
Les figures 8A, 8B montrent un dispositif de prise de vue équipé d'un dispositif à membrane objet de l'invention.

Des structures bien connues ne sont pas représentées en détail afin de ne pas alourdir inutilement la présente invention.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

On va maintenant s'intéresser aux figures 2A à 2C qui montrent sous différentes vues un premier mode de réalisation d'un dispositif à membrane objet de l'invention. Dans ce premier mode de réalisation, le support 2 comporte une cuvette. Ce dispositif à membrane peut être un dispositif optique de type lentille ou miroir.

Ce dispositif à membrane, vu en coupe sur la figure 2A, comporte comme celui représenté sur la figure 1 la membrane 1 avec sa zone d'ancrage 1.1, sa zone d'actionnement 1.2 entourée par la zone d'ancrage 1.1 et sa zone centrale 1.3 entourée par la zone d'actionnement 1.2. La membrane 1 comporte au moins une couche continue qui s'étend sur toute sa surface de la zone d'ancrage à la zone centrale. Elle peut être multicouche au moins localement.

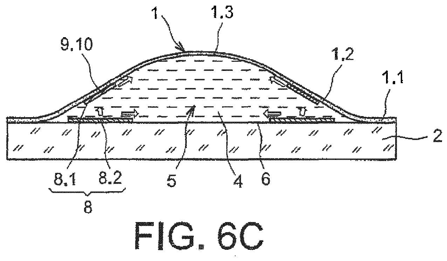

Le support 2 comporte dans ce premier exemple un fond 6 et des flancs 7 contribuant à délimiter la cavité 5, dans laquelle se trouve le fluide 4. La membrane 1 ancrée au support 2 au niveau de sa zone d'ancrage 1.1 piège le fluide 4. Ainsi la membrane 1 peut être sensiblement plane par exemple au repos. En variante illustrée sur la figure 6C, le support 2 peut être sensiblement plan sans cuvette, la membrane 1 étant alors bombée au repos.

Les moyens d'actionnement 8 sont représentés de type électrostatique avec une ou plusieurs paires d'électrodes en regard incluant, par paire, une électrode mobile 8.1 et une électrode fixe 8.2. On décrira plus loin la localisation de l'électrode fixe. Dans la cavité 5, on distingue une chambre principale 5.1 centrale au niveau de la zone centrale 1.3 et une chambre périphérique 5.2 au niveau de la zone d'actionnement 1.2, elle entoure la chambre principale 5.1. Cela signifie que la chambre principale 5.1 s'étend à l'endroit où se situe la zone centrale 1.3 de la membrane, en regard de la zone centrale 1.3. De même, la chambre périphérique 5.2 s'étend à l'endroit où se situe la zone d'actionnement 1.2, en regard de la zone d'actionnement 1.2. Bien sûr, la zone centrale et zone d'actionnement ne délimitent pas forcément la chambre principale et la chambre périphérique. Ces dernières peuvent être plus petites que les zones correspondantes. La chambre périphérique 5.2 est munie d'au moins une structure d'écoulement forcé 9 qui canalise une partie du fluide 4 se trouvant dans la chambre périphérique 5.2 vers la chambre principale 5.1 lors d'un actionnement des moyens d'actionnement 8 d'une position de repos de la membrane 1 à une position de travail de la membrane 1. La membrane 1 est sans contact avec le support en dehors de la zone d'ancrage 1.1 en position de repos. Son seul ancrage au support 2 se fait au niveau de la zone d'ancrage 1.1. Une même structure d'écoulement forcé 9 est dépourvue de fixation à la fois sur le support 2 et sur la membrane 1. Cela signifie que la structure d'écoulement forcé 9 n'est jamais fixée sur le support 2 et aussi sur la membrane 1. Elle peut être soit fixée au support 2, soit fixée à la membrane 1. En variante, elle pourrait reposer sur le support 2 sans y être fixée et son maintien en place pourrait être obtenu par un appui de la membrane ou par l'action de la gravité. Le déplacement du fluide 4 se fait en sens inverse lors d'un actionnement des moyens d'actionnement 8 de la position de travail à la position de repos.

Dans cet exemple, seule une partie du fluide 4 se trouvant dans la chambre périphérique 5.2 est canalisée dans la structure d'écoulement forcé 9, une autre partie c'est-à-dire le reste du fluide passe directement dans la chambre principale 5.1 sans passer dans la structure d'écoulement forcé 9 car la chambre périphérique 5.2 communique directement avec la chambre principale 5.1 en dehors de la structure d'écoulement forcé 9. Sur toutes les figures en coupe, les flèches illustrent le mouvement du fluide 4 lors d'un actionnement des moyens d'actionnement 8 d'une position de repos à une position de travail.

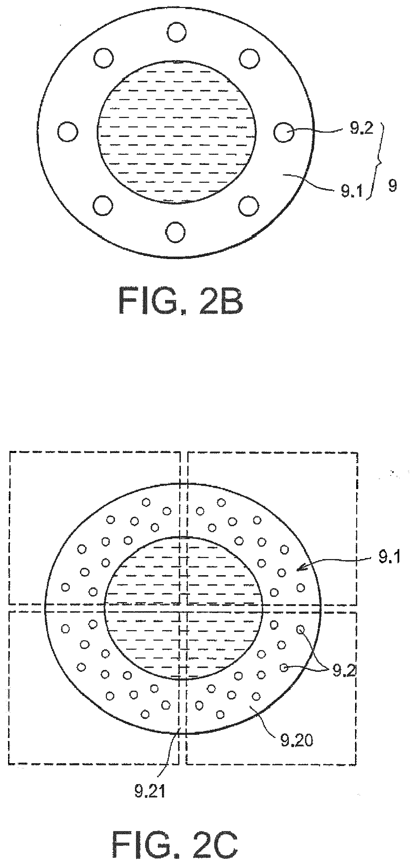

Dans cet exemple illustré aux figures 2, la structure d'écoulement forcé 9 est délimitée par le fond 6 de la cavité, par les flancs 7 et par une paroi ajourée 9.1 qui se projette depuis les flancs 7 dans la chambre périphérique 5.2 vers la chambre principale 5.1. Cette paroi 9.1 est munie d'au moins un orifice traversant 9.2 pour canaliser le fluide 4 de la chambre périphérique 5.2 et l'orienter vers la chambre principale 5.1. La paroi ajourée 9.1 a une forme de couronne dans l'exemple décrit, ce qui suppose que les flancs 7 de la cavité suivent un cercle.

Les figures 2B et 2C montrent des exemples de la paroi ajourée 9.1 qui contribue à délimiter la structure d'écoulement forcé 9 avec ses orifices traversants 9.2. Chacun d'entre eux peut se trouver en vis-à-vis d'une zone de contact entre les moyens d'actionnement 8 et la membrane 1 lors de l'actionnement d'une position de repos à une position de travail. C'est ce qui a été illustré sur la figure 2B.

Sur la figure 2C, on a représenté sur la paroi ajourée 9.2 quatre zones 9.20 distinctes munies chacune d'une pluralité d'orifices 9.2, s'étendant sensiblement chacune sur un quart de la paroi ajourée 9.1. Ces zones 9.20 sont dites riches en orifices. Les orifices 9.2 peuvent être répartis de la même manière ou non dans chacune des quatre zones 9.20. Chacune des zones 9.20 peut être associée à un actionneur particulier des moyens d'actionnement 8. Ces zones 9.20 riches en orifices sont séparées par des zones sans orifice 9.21. On suppose que dans cet exemple, il y a quatre actionneurs diamétralement opposés deux à deux, chacun d'entre eux comportant une électrode mobile 8.1 solidaire de la membrane 1 dans la zone d'actionnement 1.2 et en regard de l'électrode mobile 8.1 une électrode fixe 8.2 solidaire de la paroi ajourée 9.1. On peut réduire le nombre de zones riches en orifices et il peut n'y avoir qu'une seule zone sans orifice.

On peut envisager que la paroi ajourée 9.1 ne supporte qu'une seule électrode fixe 8.2 alors que la membrane 1 supporte plusieurs électrodes mobiles 8.1 pour former plusieurs actionneurs des moyens d'actionnement 8. L'inverse est bien sûr possible.

On peut aussi avoir plusieurs électrodes mobiles 8.1 sur la membrane 1 et plusieurs électrodes fixes 8.2 sur la paroi ajourée 9.1. Les orifices 9.2 de la paroi ajourée 9.1 diminuent la surface des électrodes fixes 8.2 par rapport à ce qu'elle serait si la paroi n'était pas ajourée. On prendra en compte ce paramètre dans le dimensionnement des électrodes fixes des actionneurs électrostatiques. Il est possible dans ce but de jouer sur le diamètre intérieur Ri de la couronne formant la paroi ajourée 9.1, en le diminuant par exemple, et/ou sur le diamètre intérieur Re de la cavité 5, en l'augmentant par exemple, de manière à augmenter la surface de la paroi ajourée 9.1.

La membrane 1 n'est pas ancrée sur cette paroi ajourée 9.1.

Les actionneurs des moyens d'actionnement 8 peuvent ne pas être actionnés en même temps, la membrane 1 pouvant alors créer un dioptre non axisymétrique dans le cas d'une application de stabilisation d'image par exemple.

Le nombre d'orifices 9.2, leur taille, leur répartition sur la paroi ajourée 9.1 sont optimisés pour faciliter l'écoulement du fluide 4 lors de l'actionnement des moyens d'actionnement 8.

Grâce à la structure d'écoulement forcé 9 placée dans la chambre périphérique 5.2, l'écoulement du fluide 4 est facilité et accéléré lors de l'actionnement et le temps de réponse du dispositif à membrane est optimisé.

Avec une telle structure, on peut augmenter le volume de fluide 4 par rapport à celui du dispositif de l'art antérieur illustré sur la figure 1, pour une même surface de membrane 1 et une même force électrostatique apportée par les moyens d'actionnement.

En effet, il est possible d'augmenter significativement l'épaisseur de fluide 4 dans la cavité 5 tout en conservant une distance, au repos, entre les électrodes 8.1, 8.2 d'un d'actionneur sensiblement la même que dans le cas du dispositif de la figure 1. La distance entre les deux électrodes 8.1, 8.2 au repos est notée h. La paroi ajourée 9.1 se trouve espacée d'une distance H du fond 6 de la cavité 5 et cette distance H peut être très supérieure à la distance h. De cette manière, on augmente très significativement le temps de réponse du dispositif à membrane par rapport à celui de l'art antérieur illustré sur la figure 1.

Par contre un tel dispositif à membrane ne permet pas d'avoir une meilleure résistance à la pesanteur, c'est-à-dire un effet du poids du fluide 4 sur la membrane 1 minimisé, ni une meilleure tenue au choc car la quantité de fluide 4 est trop importante.

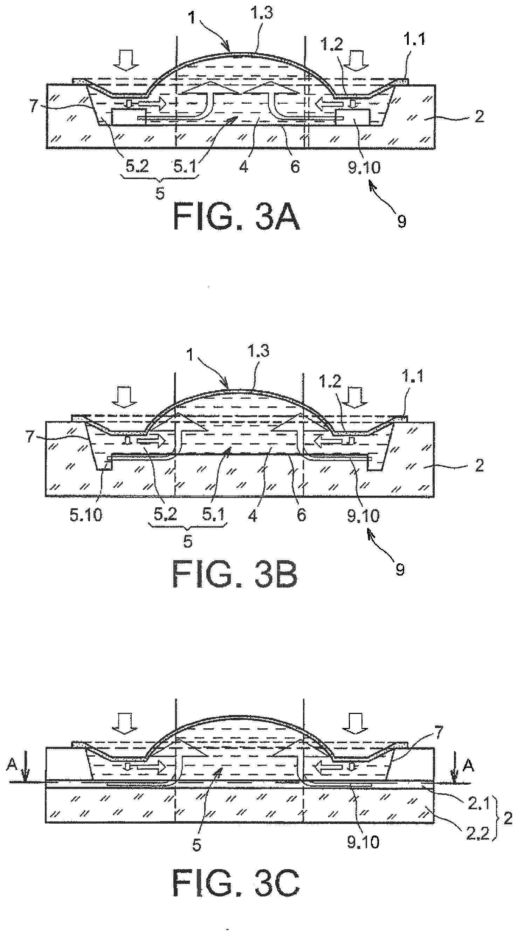

Les orifices 9.2 dans la paroi ajourée 9.1 facilitent l'écoulement du fluide 4 vers la chambre principale 5.1 alors que la distance entre électrodes 8.1, 8.2 d'un actionneur peut rester faible. Pour améliorer la résistance à la pesanteur ainsi que la résistance au choc du dispositif à membrane, il est possible d'utiliser une autre structure d'écoulement forcé 9. On se réfère maintenant aux figures 3A à 3I.

La structure d'écoulement forcé 9 est formée de tranchées 9.10 s'étendant dans la chambre périphérique 5.2 et rayonnant en soleil vers la chambre principale 5.1.

Sur la figure 3A, la structure d'écoulement forcé 9 à tranchées 9.10 est disposée sur le fond 6 du support 2. Elle est en relief par rapport au fond 6 du support 2. Les tranchées 9.10 s'arrêtent avant la chambre principale 5.1 et sont sans contact avec les flancs 7. Elles n'empiètent pas dans le champ optique dans le cas d'un dispositif de type lentille ou miroir. Lors de l'actionnement des moyens d'actionnement 8, une partie du fluide 4 se trouvant dans la chambre périphérique 5.2 est canalisée dans ces tranchées 9.10 et est dirigée vers la chambre principale 5.1. Le reste du fluide 4 se déplace directement de la chambre périphérique 5.2 vers la chambre principale 5.1 sans emprunter les tranchées 9.10.

Sur la figure 3B, c'est le fond 6 de la cavité 5 qui est creusé pour délimiter les tranchées 9.10. Ces tranchées 9.10 ont sensiblement une section constante dans l'exemple décrit, mais ce n'est pas une obligation. Du côté des flancs 7, on a représenté une fosse périphérique 5.10 qui longe les flancs 7. Les tranchées 9.10 débouchent dans la fosse périphérique 5.10 qui est plus profonde que les tranchées 9.10. Vers le centre, les tranchées 9.10 s'arrêtent au niveau du champ optique que l'on a matérialisé par des pointillés verticaux. Sur cette figure 3B, on n'a pas représenté les moyens d'actionnement dans un souci de clarté. Toutefois on s'aperçoit que l'épaisseur de fluide 4 entre le sommet d'une tranchée 9.10 et la zone d'actionnement 1.2 de la membrane 1 est similaire à celle de l'art antérieur illustré à la figure 1. Au niveau de la chambre principale 5.1, le fond 6 se trouve au niveau du sommet des tranchées 9.10 ou du fond 6 entre deux tranchées 9.10 successives. Dans cet exemple la cavité 5 est circulaire. On pourrait envisager que bien sûr que la cavité ne soit pas circulaire mais parallélépipédique par exemple.

Sur la figure 3B, le support au niveau du fond 6 est monolithique. Sur la figure 3C, il possède plusieurs couches empilées avec une couche superficielle 2.1 qui repose, dans cet exemple sur au moins une couche de base 2.2. Les tranchées 9.10 sont formées dans la couche superficielle 2.1. La couche superficielle 2.1 et la couche de base peuvent être réalisées, par exemple, en oxyde de silicium ou en nitrure de silicium. Elles ne sont pas forcément dans le même matériau.

Comme sur la figure 3B, les tranchées s'arrêtent avant les flancs 7 de la cavité 5 et vont jusqu'au champ optique. On ne retrouve pas la fosse périphérique. Les tranchées 9.10 pourraient bien évidemment se prolonger jusqu'aux flancs 7. Sur la figure 3C, on peut remarquer que le support 2 est réalisé par un substrat formant le fond multicouche et que les flancs 7 sont réalisés par un cordon de colle destiné à ancrer la membrane au support et plus précisément au substrat.

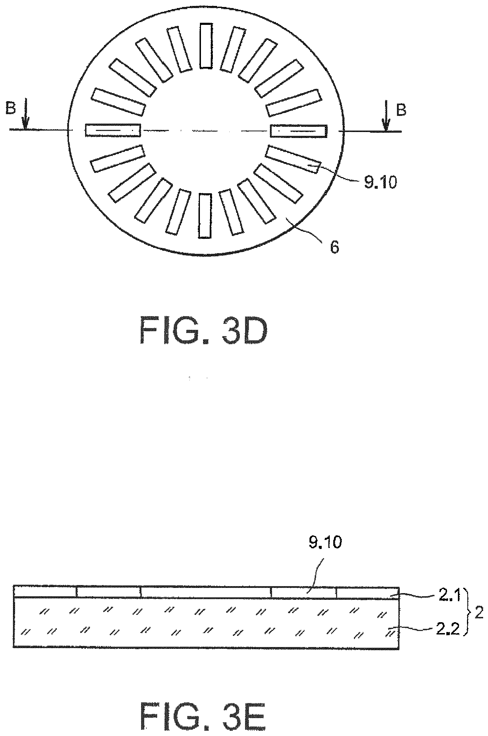

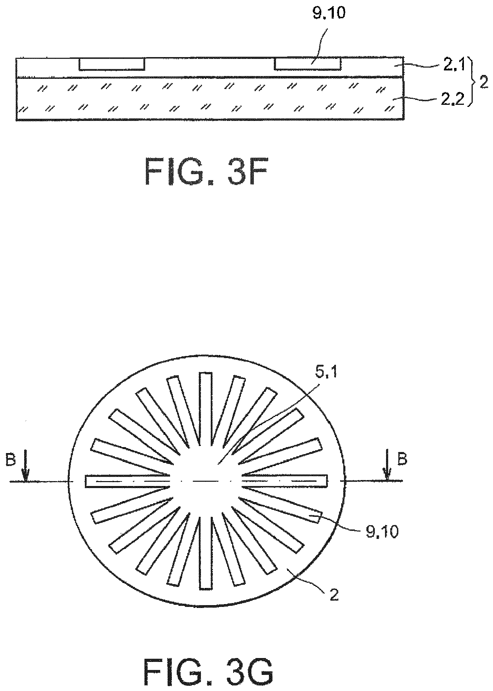

La figure 3D est une vue de dessus du fond 6 de la cavité. Les tranchées 9.10 radiales sont bien visibles. La figure 3E est une vue en coupe transversale selon l'axe BB du support 2 au niveau du fond 6 de la cavité illustrée à la figure 3D, les flancs 7 sont omis. Les tranchées 9.10 sont formées dans toute l'épaisseur de la couche superficielle 2.1, elles mettent à nu la couche de base 2.2. Sur la figure 3F, les tranchées 9.10 sont moins profondes, leur profondeur est inférieure à l'épaisseur de la couche superficielle 2.1, la couche de base 2.2 n'est pas mise à nu.

Sur la figure 3G, les tranchées 9.10 se prolongent dans le champ optique, c'est-à-dire dans la chambre principale 5.1. Dans le cas où le dispositif à membrane objet de l'invention est un dispositif optique fonctionnant en transmission, l'impact optique des tranchées 9.10 peut être minimisé en choisissant un fluide 4 et un fond 6 pour le support 2 qui auront sensiblement des indices optiques sensiblement égaux ou très proches l'un de l'autre.

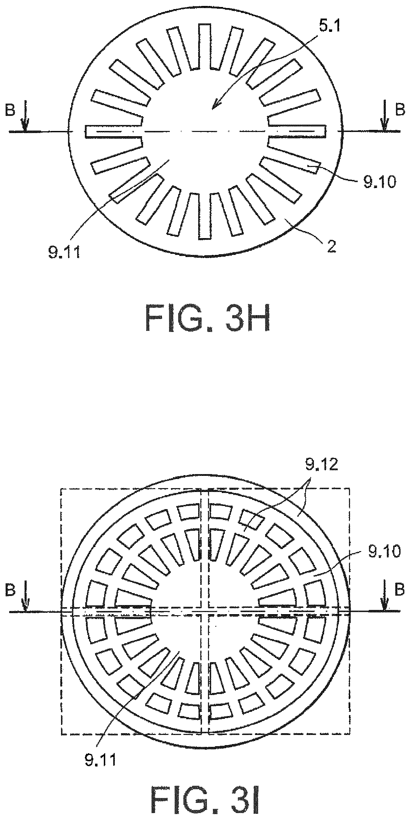

Sur la figure 3H, les tranchées 9.10 ne se prolongent pas dans le champ optique mais débouchent dans une cuvette 9.11 qui occupe la surface du champ optique et qui peut se trouver sensiblement à la même profondeur que le fond 6 des tranchées 9.10.

Les exemples présentés ci-dessus correspondent à un écoulement facilité et accéléré de la chambre périphérique 5.2 vers la chambre principale 5.1. De tels dispositifs sont particulièrement intéressants dans le cadre de lentilles ou de miroirs à distance focale variable. Pour des dispositifs de stabilisation d'images, on recherche d'une part que les écoulements soient radiaux mais aussi qu'ils soient ortho radiaux. La figure 3I illustre un exemple d'écoulement radial et ortho radial. On distingue donc deux tranchées 9.12 circulaires concentriques et vingt tranchées 9.10 radiales. On prévoit également une cuvette 9.11 dans laquelle débouchent les tranchées 9.10 radiales. Cette géométrie de structure d'écoulement forcé 9 n'est qu'un exemple. Il est bien entendu que la structure d'écoulement forcé 9 à tranchées peut avoir des tranchées ayant d'autres directions, dans la mesure où la fonction de faciliter l'écoulement de la chambre périphérique 5.2 vers la chambre principale 5.1 est obtenue.

Sur la figure 3I, on a matérialisé avec les pointillés quatre zones d'écoulement distinctes pouvant être soumises à un actionnement dédié pour faire de la stabilisation d'image.

Pour ne pas surcharger les figures 3, on n'avait pas représenté de moyens d'actionnement 8 et la structure d'écoulement forcé 9 se trouvait toujours au niveau du fond 6 du support 2.

On va voir maintenant plusieurs autres variantes du dispositif à membrane objet de l'invention.

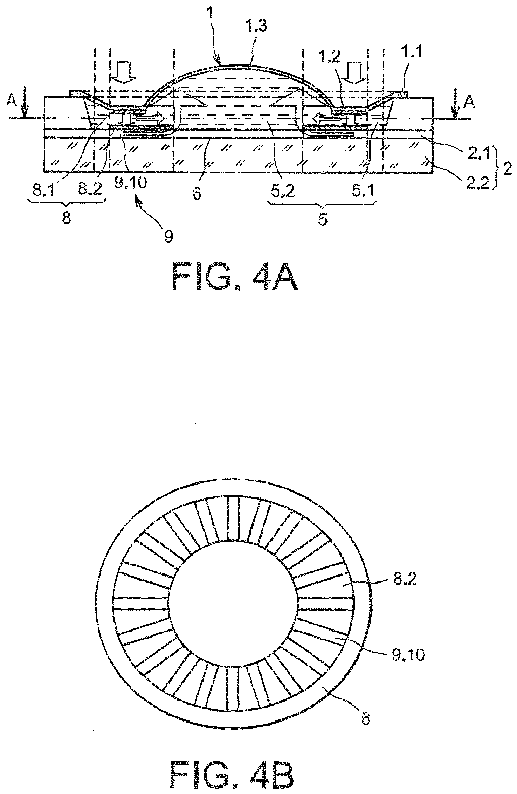

Sur les figures 4A et 4B, on a représenté des moyens d'actionnement 8 électrostatiques avec une ou plusieurs électrodes mobiles 8.1 solidaires de la membrane 1 dans la zone d'actionnement 1.2 et une pluralité d'électrodes fixes 8.2 solidaires du fond 6 du support 2, deux électrodes fixes 8.2 successives étant séparées par une tranchée 9.10 de la structure à écoulement forcé 9. Dans cet exemple, comme sur la figure 3C, le fond 6 est multicouche et les tranchées 9.10 sont formées dans la couche superficielle 2.1 du fond 6. La couche de base est référencée 2.2. Les électrodes 8.1, 8.2 en regard peuvent être suffisamment proches pour garantir une bonne efficacité de l'actionnement sans pénaliser le temps de réponse du dispositif à membrane. Sur ces figures 4, la membrane 1 est représentée monocouche, mais bien sûr elle pourrait être multicouche au moins localement.

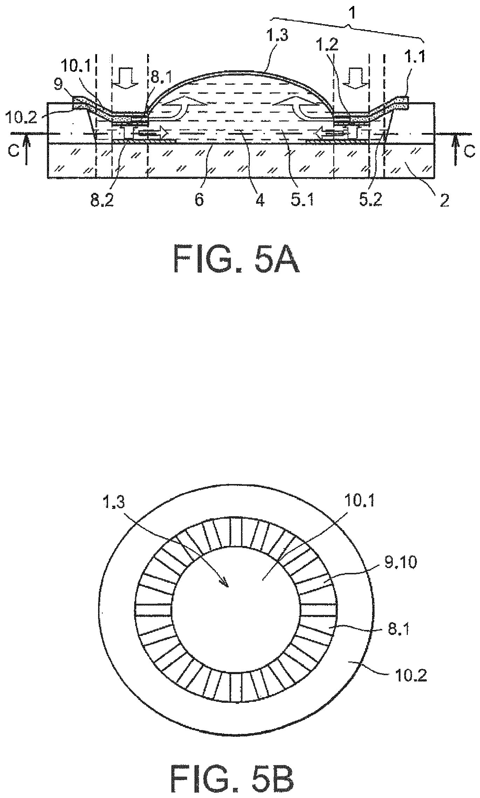

Sur les figures 5A, 5B, la structure à écoulement forcé 9 est maintenant solidaire de la membrane 1. La figure 5B est une vue de dessous de la membrane 1. La membrane 1 peut être monocouche ou multicouche au moins dans la zone d'actionnement 1.2. Elle peut être plus épaisse dans la zone d'actionnement 1.2 que dans la zone centrale 1.3. Dans l'exemple des figures 5, la membrane 1 comporte au moins une première couche continue 10.1 qui s'étend de la zone centrale 1.3 à la zone d'ancrage 1.1 et au moins une seconde couche 10.2 empilée avec la première couche 10.1 qui s'étend dans la zone d'actionnement 1.2 et éventuellement dans la zone d'ancrage 1.1. En variante, la membrane 1 aurait pu être monocouche mais à épaisseur variable.

Il y a, dans cet exemple, un épaississement dans la zone d'actionnement 1.2 et dans la zone d'ancrage 1.1 par rapport à la zone centrale 1.3. L'épaississement aurait pu se limiter à la zone d'actionnement 1.2.

Dans ces configurations l'épaississement n'est pas obligatoire mais avantageux dans la mesure où l'objectif est de disposer d'une membrane souple donc la plus fine possible dans la zone centrale pour maximiser la déformation au centre.

La structure à écoulement forcé 9 comporte des tranchées 9.10 dirigées de la chambre périphérique 5.2 vers la chambre principale 5.1, ces tranchées 9.10 sont situées dans la zone d'actionnement 1.2 qui est épaissie. L'épaisseur de la membrane dans la zone d'actionnement 1.2 entre les tranchées 9.10 est supérieure à celle de la membrane dans la zone centrale 1.3.

Dans l'exemple, les tranchées 9.10 sont formées dans la ou les couches empilées 10.2 avec la couche continue 10.1, elles peuvent bien sûr atteindre la couche continue 10.1 et même mordre dedans sans bien entendu fragiliser la couche continue 10.1, ce qui l'amènerait à se rompre.

Des électrodes mobiles 8.1 sont solidaires de la membrane 10 dans la zone d'actionnement 1.2, elles s'étendent entre les tranchées 9.10. On a représenté une électrode mobile 8.1 entre deux tranchées 9.10 successives, mais ce n'est qu'un exemple, il est possible de prévoir moins d'électrodes mobiles. Le support 2 comporte une ou plusieurs électrodes fixes 8.2 en regard des électrodes mobiles 8.1. Ici encore l'épaisseur de fluide 4 entre les électrodes 8.1, 8.2 en regard des moyens d'actionnement 8 peut être réduite alors que le temps de réponse est accru par rapport à l'art antérieur.

Le fait de placer la structure d'écoulement forcé 9 au niveau de la membrane 1 permet d'agir sur la rigidité de la membrane 1. En effet, dans la zone d'actionnement 1.2 la membrane 1 a une première rigidité au niveau des tranchées 9.10 et une seconde rigidité supérieure à la première rigidité entre les tranchées 9.10. Une telle alternance de zones plus rigides et moins rigides peut faciliter l'efficacité de l'actionnement notamment dans le cas d'un actionnement dissymétrique pour une application de stabilisation d'image par exemple.

La ou les couches 10.2 participant à la structure d'écoulement forcé 9, autre que la couche continue 10.1 peuvent avoir d'autres fonctions que celles d'accueillir les tranchées 9.10 et de rigidifier localement la zone d'actionnement 1.2 entre les tranchées 9.10. Lorsqu'elles s'étendant sur la zone d'ancrage 1.1, elles peuvent améliorer l'ancrage au support 2.

Elles peuvent aussi servir à réduire la perméation de la membrane 1, c'est-à-dire la capacité à traverser la membrane.

Sur les figures 5A, 5B, on a représenté que les tranchées 9.10 s'arrêtent avant la zone centrale 1.3, mais il est bien entendu qu'elles pourraient se prolonger dans la zone centrale 1.3 comme on l'a représenté sur la figure 3G lorsqu'elles étaient au fond 6 de la cavité. Les électrodes mobiles 8.1 n'empièteraient pas elles sur la zone centrale 1.3.

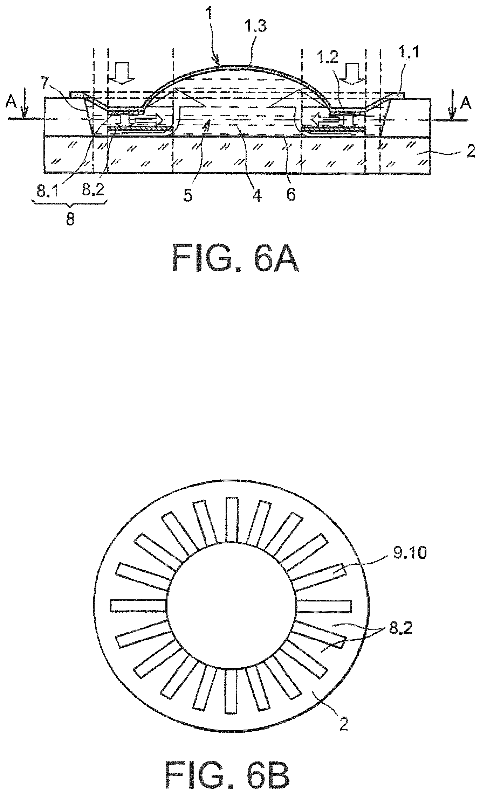

Sur les figures 6A et 6B, la structure d'écoulement forcé 9 est maintenant intégrée aux moyens d'actionnement 8.

Plus particulièrement, les moyens d'actionnement 8 comportent une ou plusieurs électrodes fixes 8.1 disposées sur le fond 6 de la cavité 5. La structure d'écoulement forcé 9 comporte des tranchées 9.10 qui sont formées par l'espacement existant entre deux électrodes fixes 8.1 successives ou qui sont formées dans l'électrode fixe 8.1 unique. Dans le premier cas, les tranchées 9.10 mettent à nu le matériau du support 2 et pas dans le second.

De la même manière, on pourrait envisager que la structure d'écoulement forcé 9 soit intégrée à l'électrode ou aux électrodes mobiles 8.1 des moyens d'actionnement 8 électrostatiques, dans la mesure où cette électrode ou ces électrodes mobiles 8.1 sont en contact avec le fluide 4. On peut se référer à la figure 6C. Dans la description qui précède, on a toujours représenté un support 2 de la membrane 1 présentant une dépression accueillant le fluide 4, mais ce n'est pas une obligation. C'est ce qu'illustre la figure 6C. Le support 2 est sensiblement plan. Cette configuration de support 2 peut s'appliquer à toutes les variantes dans lesquelles la structure d'écoulement forcé est à tranchées.

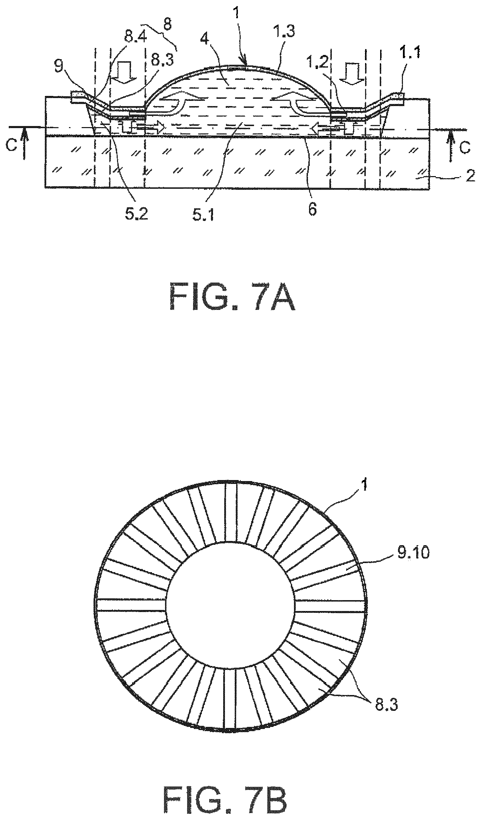

Sur les figures 7A et 7B, on a représenté encore un exemple de dispositif à membrane selon l'invention dans lequel la structure d'écoulement forcé 9 est intégrée aux moyens d'actionnement 8, mais maintenant les moyens d'actionnement 8 sont piézoélectriques. Ils pourraient bien sûr être des bimorphes thermiques, c'est-à-dire comportant au moins deux couches ayant des coefficients de dilatation thermique différents, ou être magnétiques. La membrane 1 porte dans la zone d'actionnement 1.2 et éventuellement dans la zone d'ancrage 1.1, du côté du fluide 4, une ou plusieurs couches empilées constitutives des moyens d'actionnement 8, c'est couches étant référencées 8.3, 8.4, la couche 8.3 étant en contact avec le fluide 4. Parmi ces couches 8.3, 8.4, au moins l'une d'entre elles, ici la couche 8.4 peut s'étendre dans la zone d'ancrage 1.1. Les tranchées 9.10 de la structure d'écoulement forcé 9 sont formées dans au moins une de ces couches depuis celle en contact avec le fluide 4. Entre deux tranchées 9.10 successives, on trouve la couche 8.3, elle est délimitée en forme de poutre en secteur de couronne par exemple, apte à se déformer lors d'un actionnement d'une position de repos à une position de travail en entraînant la membrane 1 vers le fond 6 de la cavité 5. Ici encore une partie du fluide 4 se trouvant dans la chambre périphérique 5.2 va emprunter les tranchées 9.10 de la structure d'écoulement forcé 9 pour se diriger vers la chambre principale 5.1.

Dans les deux variantes qui viennent d'être décrites, les tranchées 9.10 peuvent mordre dans le fond 6 du support ou seulement le mettre à nu ou bien mordre dans la membrane 1 ou seulement la mettre à nu. Il est bien sûr possible que les tranchées n'atteignent pas le fond 6 ou la membrane 1.

La membrane peut être réalisée à base de matériaux organiques tels que le polydiméthylsiloxane, le polyméthacrylate de méthyle, le polyéthylène téréphtalate, le polycarbonate, le parylène, les résines époxydes, les polymères photosensibles, les silicones tels que ceux connus sous la dénomination SiNR de chez Shin-Etsu ou sous la dénomination WL5150 de chez Dow Corning ou de matériaux minéraux tels que le silicium, l'oxyde de silicium, le nitrure de silicium, le carbure de silicium, le silicium polycristallin, le nitrure de titane, le carbone diamant, l'oxyde d'étain et d'indium, l'aluminium, le cuivre, le nickel.

Le fluide peut être un liquide choisi parmi le carbonate de propylène, l'eau, un liquide d'indice, une huile optique ou encore un liquide ionique, ou un gaz choisi parmi l'air, l'azote, l'hélium, l'argon.

Les moyens d'actionnement peuvent être réalisés à base de PZT, de nitrure d'aluminium, de polyfluorure de vinylidène ou de ses copolymères, de trifluoroéthylène, d'oxyde de zinc, de titanate de barium, de niobate de plomb, de sillénites tels que le titanate de bismuth lorsqu'ils sont piézoélectriques ou à base de matériau conducteur de type métallique tel que le cuivre, l'argent, l'or, l'aluminium, le titane ou même en ITO lorsqu'ils sont électrostatiques, à base de silicium, d'oxyde de silicium ou encore de nitrure de silicium lorsqu'ils sont des bimorphes thermiques ou en matériaux ferromagnétiques comme le fer, le nickel, le cobalt lorsqu'ils sont magnétiques.

Le support et notamment son fond peuvent être réalisés par exemple en verre, en matériau semiconducteur, en matière plastique.

Le dispositif à membrane objet de l'invention peut être réalisé par des techniques connues en microélectronique. On peut utiliser des techniques de dépôt en couche mince de type dépôt chimique en phase vapeur, de type dépôt physique par phase vapeur d'électrodéposition, d'épitaxie, d'oxydation thermique, d'évaporation, de laminage de films. Les matériaux organiques ou de type sol gel peuvent être déposés par pulvérisation à la tournette. Des techniques de moulage, d'embossage, de gaufrage à chaud, de nano impression, peuvent être employées pour structurer le fond 6 de la cavité 5 et réaliser les tranchées 9.10 de la structure d'écoulement forcé 9. Des techniques de collage peuvent aussi être utilisées pour le collage de la membrane 1 au support 2 ou d'un fond à un cadre sur lequel la membrane est ancrée, ces techniques peuvent par exemple être choisies parmi le collage direct, le collage eutectique, le collage anodique, le collage organique. Des étapes d'amincissement par exemple par rodage, amincissement chimique ou bien combinaison des deux types peuvent être prévues après le collage du fond au cadre. Le dispositif à membrane peut être fabriqué par lots.

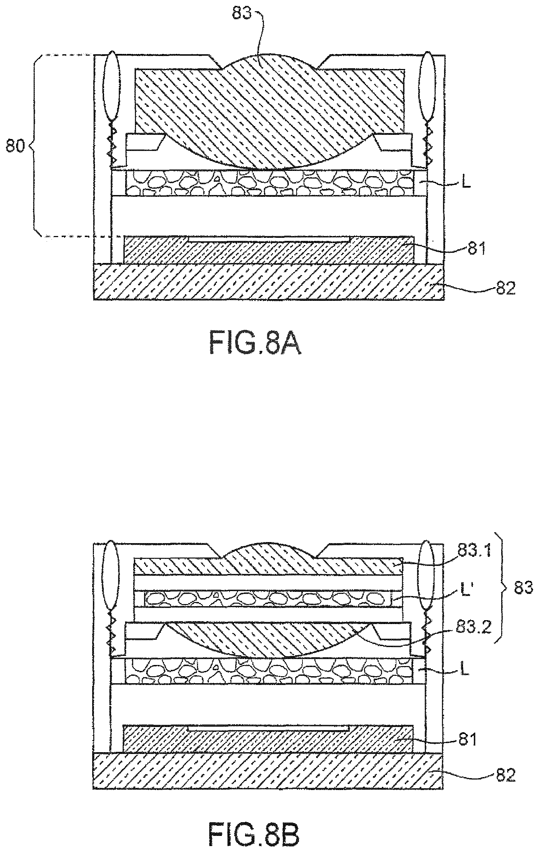

Un tel dispositif à membrane peut être employé comme dispositif optique à distance focale variable dans un dispositif de prise de vue notamment celui d'un appareil photo de téléphone portable. On se réfère à la figure 8A. Un tel dispositif de prise de vue comporte en cascade, un objectif 80 incluant au moins un dispositif optique à distance focale variable L selon l'invention de type lentille liquide, un capteur d'image 81 par exemple de type CCD ou CMOS porté par un substrat 82. Dans l'exemple décrit, l'objectif 80 comporte au moins une lentille 83 à distance focale fixe et une lentille liquide L selon l'invention. Par la suite cette lentille à distance focale fixe 83 sera appelée bloc optique conventionnel. La lentille liquide L se trouve entre le bloc optique conventionnel 83 et le capteur d'image 81. En variante le bloc optique conventionnel 83 peut se trouver entre la lentille liquide L et le capteur d'image 81. Cette dernière configuration est plus avantageuse pour une application autofocus. Le bloc optique conventionnel 83 est statique. Comme on l'a vu précédemment, de par son procédé de fabrication, la lentille liquide L peut être assimilée à un MOEMS (microsystème optoélectromécanique). La lentille liquide L à focale variable est placée à une certaine distance, qui dépend des caractéristiques de l'objectif 80, du capteur d'image 81, mais si cette distance est petite, la lentille liquide L et le capteur d'image 81 ne pourront faire qu'un seul composant en les intégrant soit en technologie AIC (abréviation anglo-saxonne de Above Integrated Circuit pour au-dessus du circuit intégré), soit en technologie WLCSP (abréviation anglo-saxonne de Wafer Level Chip Scale Package soit sur tranche à l'échelle de la puce). La distance focale de la lentille liquide L est adaptée en optimisant la pression du liquide au repos, mais aussi la courbure de la membrane 2 au repos et l'indice de réfraction du liquide.

Si le dispositif de prise de vue inclut également la fonction zoom comme sur la figure 8B, on utilisera, un bloc optique 83 avec au moins deux lentilles à distance focale fixe 83.1 83.2 et deux lentilles liquides L et L' dont l'une se trouve entre les deux lentilles 83.1, 83.2 du bloc optique 83 et l'autre à proximité du capteur d'image 81 comme sur la figure 8B. Sur ces figures 8A, 8B, les dispositifs optiques selon l'invention référencés L et L' sont représentés très schématiquement, on ne voit pas leurs moyens d'actionnement ni leur structure d'écoulement forcé. L'utilisation de deux lentilles liquides est une façon particulière et répandue de réaliser la fonction zoom.

Bien que plusieurs modes de réalisation de la présente invention aient été décrits de façon détaillée, on comprendra que différents changements et modifications puissent être apportés sans sortir du cadre de l'invention. Les différentes variantes décrites doivent être comprises comme n'étant pas exclusives les unes des autres, elles peuvent se combiner.

Le dispositif objet de l'invention pourrait comporter une structure d'écoulement forcé à paroi ajourée et au moins une à tranchées. Elle peut comporter une structure d'écoulement forcé intégrée à la membrane et/ou intégrée au fond et/ou intégrée aux moyens d'actionnement.

Autres modes de réalisation :
1. Dispositif comportant une membrane (1) et un support (2) délimitant une cavité contenant une quantité sensiblement constante d'un fluide (4), la membrane (1) comportant une zone d'ancrage (1.1) périphérique au support (2), une zone centrale (1.3) apte à se déformer de manière réversible lors d'un déplacement de fluide (4) et une zone d'actionnement (1.2) entre la zone d'ancrage (1.1) et la zone centrale (1.3), ainsi que des moyens d'actionnement (8) destinés à solliciter la membrane (1) dans la zone d'actionnement (1.2) et à provoquer un déplacement du fluide (4) vers la zone centrale (1.3) lors d'un actionnement, caractérisé en ce que la cavité comporte une chambre principale (5.1) au niveau de la zone centrale (1.3) et une chambre périphérique (5.2) au niveau de la zone d'actionnement (1.2) communiquant avec la chambre principale (5.1), et en outre la chambre périphérique (5.2) comporte au moins une structure d'écoulement forcé (9) communicant avec la chambre principale (5.1) pour favoriser l'écoulement d'au moins une partie du fluide (4) de la chambre périphérique vers la chambre principale (5.1) ou vice versa lors de l'actionnement, le reste du fluide se déplaçant de la chambre périphérique (5.2) vers la chambre principale (5.1) ou vice versa sans passer par la structure d'écoulement forcé (9), une même structure d'écoulement forcé (9) étant dépourvue de fixation à la fois sur le support (2) et sur la membrane (2).
2. Dispositif selon la mode de réalisation 1, dans lequel la cavité (5) est délimitée dans le support (2) par des flancs (7) et un fond (6), la structure d'écoulement forcé (9) comprenant une paroi ajourée (9.1) se projetant depuis les flancs (7) dans la chambre périphérique (5.2) en direction de la chambre principale (5.3).
3. Dispositif selon la mode de réalisation 2, dans lequel les moyens d'actionnement (8) comportent une pluralité d'actionneurs venant en contact avec la membrane dans la zone d'actionnement (1.2) au niveau d'une zone de contact, la paroi ajourée (9.1) comportant au moins un orifice (9.2) en regard d'une zone de contact.
4. Dispositif selon la mode de réalisation 2, dans lequel la paroi ajourée (9.1) comporte plusieurs zones (9.20) riches en orifices et au moins une zone (9.21) sans orifice.
5. Dispositif selon l'une des modes de réalisations 2 à 4, dans lequel la paroi ajourée (9.1) est munie d'au moins une électrode (8.2) des moyens d'actionnement (8), cette électrode faisant face à une autre électrode (8.1) portée par la membrane (1).
6. Dispositif selon l'une des modes de réalisations 2 à 5, dans lequel la paroi ajourée (9.1) est plus proche de la zone d'actionnement (1.1) que du fond (6) de la cavité (5).
7. Dispositif selon l'une des modes de réalisations 1 à 6, dans lequel le support (2) forme un fond (6) à la cavité (5), la structure d'écoulement forcé (9) comporte une pluralité de tranchées (9.10) intégrées à la membrane (1) dans la zone d'actionnement (1.2) et/ou intégrées au fond (6) en regard de la zone d'actionnement (1.2) et/ou intégrées aux moyens d'actionnement (8) dans la mesure où ils sont en contact avec le fluide (4), ces tranchées (9.10) étant dirigées de la chambre périphérique (5.2) vers la chambre principale (5.1).
8. Dispositif selon la mode de réalisation 7, dans lequel les tranchées (9.10) sont dirigées radialement par rapport au centre de la chambre principale (5.1).
9. Dispositif selon la mode de réalisation 8, dans lequel la structure d'écoulement forcé (9) comporte en outre au moins une tranchée (9.12) ortho radiale.
10. Dispositif selon l'une des modes de réalisations 7 à 9, dans lequel les tranchées (9.10, 9.12) sont formées dans le fond (6) du support (2) et lorsque le support (2) est multicouche au niveau du fond, les tranchées sont formées totalement ou partiellement dans une couche superficielle (2.1) du fond.
11. Dispositif selon l'une des modes de réalisations 7 à 10, dans lequel les tranchées (9.10, 9.12) sont formées dans la zone d'actionnement (1.2) de la membrane (1), la zone d'actionnement (1.2) pouvant être épaissie par rapport à la zone centrale (1.3).
12. Dispositif selon la mode de réalisation 11, dans lequel la membrane (1) comporte un empilement de couches (10.1, 10.2) au niveau de la zone d'actionnement (11.2) dans lequel les tranchées (9.10, 9.12) sont formées, cet empilement pouvant se prolonger au moins en partie au niveau de la zone d'ancrage (1.1).
13. Dispositif selon l'une des modes de réalisations 7 à 9, dans lequel les tranchées (9.10, 9.12) sont délimitées par les moyens d'actionnement (8) solidaires du fond et/ou par les moyens d'actionnement (8) solidaires de la membrane (1) en contact avec le fluide (4), les tranchées (9.10, 9.12) pouvant mordre dans ou mettre à nu le fond (6), respectivement la membrane (1).
14. Dispositif selon l'une des modes de réalisations 7 à 13, dans lequel les tranchées (9.10) au niveau du fond (6) pénètrent dans la chambre principale (5.1).
15. Dispositif selon la mode de réalisation 14, dans lequel les tranchées (9.10) débouchent dans une cuvette (9.11) portée par le fond (6) située dans la chambre principale (5.1).
16. Dispositif selon l'une des modes de réalisations 7 à 15, dans lequel le fond (5) comporte une fosse périphérique (5.10) dans la chambre périphérique (5.2) à l'opposé de la chambre principale (5.1), les tranchées (9.10) débouchant dans la fosse lorsqu'elles sont formées dans le fond (5).
17. Dispositif selon l'une des modes de réalisations précédentes caractérisé en ce que c'est un miroir ou une lentille.
18. Dispositif de prise de vue, caractérisé en ce qu' il comporte un dispositif selon l'une des modes de réalisations 1 à 17.

## Revendications

1. Dispositif comportant une membrane (1) et un support (2) délimitant une cavité contenant une quantité sensiblement constante d'un fluide (4), la membrane (1) comportant une zone d'ancrage (1.1) périphérique au support (2), une zone centrale (1.3) apte à se déformer de manière réversible lors d'un déplacement de fluide (4) et une zone d'actionnement (1.2) entre la zone d'ancrage (1.1) et la zone centrale (1.3), ainsi que des moyens d'actionnement (8) destinés à solliciter la membrane (1) dans la zone d'actionnement (1.2) et à provoquer un déplacement du fluide (4) vers la zone centrale (1.3) lors d'un actionnement, la cavité comportant une chambre principale (5.1) au niveau de la zone centrale (1.3) et une chambre périphérique (5.2) au niveau de la zone d'actionnement (1.2) communiquant avec la chambre principale (5.1), la chambre périphérique (5.2) comportant en plus au moins une structure d'écoulement forcé (9) communicant avec la chambre principale (5.1) pour faciliter l'écoulement d'une partie du fluide de la chambre périphérique (5.2) vers la chambre principale (5.1) ou vice versa lors de l'actionnement, le reste du fluide se déplaçant de la chambre périphérique (5.2) vers la chambre principale (5.1) ou vice versa sans passer par la structure d'écoulement forcé (9), une même structure d'écoulement forcé (9) étant dépourvue de fixation à la fois sur le support (2) et sur la membrane (1).

2. Dispositif selon la revendication 1, dans lequel la cavité (5) est délimitée dans le support (2) par des flancs (7) et un fond (6), la structure d'écoulement force (9) comprenant une paroi ajourée (9.1) se projetant depuis les flancs (7) dans la chambre périphérique (5.2) en direction de la chambre principale (5.1).

3. Dispositif selon la revendication 2, dans lequel les moyens d'actionnement (8) comportent une pluralité d'actionneurs venant en contact avec la membrane dans la zone d'actionnement (1.2) au niveau d'une zone de contact, la paroi ajourée (9.1) comportant au moins un orifice (9.2) en regard d'une zone de contact.

4. Dispositif selon la revendication 2, dans lequel la paroi ajourée (9.1) comporte plusieurs zones (9.20) riches en orifices et au moins une zone (9.21) sans orifice.

5. Dispositif selon l'une des revendications 2 à 4, dans lequel la paroi ajourée (9.1) est munie d'au moins une électrode (8.2) des moyens d'actionnement (8), cette électrode faisant face à une autre électrode (8.1) portée par la membrane (1).

6. Dispositif selon l'une des revendications 2 à 5, dans lequel la paroi ajourée (9.1) est plus proche de la zone d'actionnement (1.1) que du fond (6) de la cavité (5).

7. Dispositif selon l'une des revendications 1 à 6, dans lequel le support (2) forme un fond (6) à la cavité (5), la structure d'écoulement forcé (9) comporte une pluralité de tranchées (9.10) intégrées à la membrane (1) dans la zone d'actionnement (1.2) et/ou intégrées au fond (6) en regard de la zone d'actionnement (1.2) et/ou intégrées aux moyens d'actionnement (8) dans la mesure où ils sont en contact avec le fluide (4), ces tranchées (9.10) étant dirigés de la chambre périphérique (5.2) vers la chambre principale (5.1).

8. Dispositif selon la revendication 7, dans lequel les tranchées (9.10) sont dirigées radialement par rapport au centre de la chambre principale (5.1).

9. Dispositif selon la revendication 8, dans lequel la structure d'écoulement forcé (9) comporte en outre au moins une tranche (9.12) ortho radiale.

10. Dispositif selon l'une des revendications 7 à 9, dans lequel les tranchées (9.10, 9.12) sont formées dans le fond (6) du support (2) et lorsque le support (2) est multicouche au niveau du fond, les tranchées sont formées totalement ou partiellement dans une couche superficielle (2.1) fond.

11. Dispositif selon l'une des revendications 7 à 10, dans lequel les tranchées (9.10, 9.12) sont formés dans la zone d'actionnement (1.2) de la membrane (1), la zone d'actionnement (1.2) pouvant être épaissie par rapport à la zone centrale (1.3).

12. Dispositif selon la revendication 11, dans lequel la membrane (1) comporte un empilement de couches (10.1, 0.2) au niveau de la zone d'actionnement (11.2) dans lequel les tranchées (9.10, 9.12) sont formées, cet empilement pouvant se prolonger au moins en partie au niveau de la zone d'ancrage (1.1).

13. Dispositif selon l'une des revendications 7 à 9, dans lequel les tranchées (9.10, 9.12) sont délimitées par les moyens d'actionnement (8) solidaires du fond et/ou par les moyens d'actionnement (8) solidaires de la membrane (1) en contact avec le fluide (4), les tranchées (9.10, 9.12) pouvant mordre dans ou mettre à nu le fond (6), respectivement la membrane (1).

14. Dispositif selon l'une des revendications 7 à 13, dans lequel les tranchées (9.10) au niveau du fond (6) pénètrent dans la chambre principale (5.1).

15. Dispositif selon la revendication 14, dans lequel au moins :
les tranchées (9.10) débouchent dans une cuvette (9.11) portée par le fond (6) située dans la chambre principale (5.1) ; ou
le fond (5) comporte une fosse périphérique (5.10) dans la chambre périphérique (5.2) à l'opposé de la chambre principale (5.i), les tranchées (9.10) débouchant dans la fosse lorsqu'elles sont formées dans le fond (5).
